(19) Europäisches Patentamt

European Patent Office

Office européen des brevets

(11) **EP 0 638 976 B1**

(12) **EUROPÄISCHE PATENTSCHRIFT**

(45) Veröffentlichungstag und Bekanntmachung des Hinweises auf die Patenterteilung:
**11.06.1997 Patentblatt 1997/24**

(51) Int Cl.6: **H02G 15/013**

(21) Anmeldenummer: **94112369.7**

(22) Anmeldetag: **08.08.1994**

(54) **Muffenkopf für eine Kabelmuffe mit einem Dichtungseinsatz aus elastischem Material**

Sleeve end for a cable sleeve with a sealing insert of resilient material

Extrémité de manchon pour un manchon de câble à pièce d'insertion en matériau élastique

(84) Benannte Vertragsstaaten:
**AT BE CH DE DK ES FR GB GR IT LI NL SE**

(30) Priorität: **11.08.1993 DE 4326972**

(43) Veröffentlichungstag der Anmeldung:
**15.02.1995 Patentblatt 1995/07**

(73) Patentinhaber: **SIEMENS AKTIENGESELLSCHAFT**
**80333 München (DE)**

(72) Erfinder: **Kunze, Dieter**
**D-82061 Neuried (DE)**

(56) Entgegenhaltungen:
EP-A- 0 309 895 WO-A-92/22113
US-A- 2 688 651 US-A- 3 254 153
US-A- 4 255 614

## Beschreibung

Die Erfindung betrifft eine einen Muffenkopf aufweisende Kabelmuffe mit einem Dichtungseinsatz aus elastischem Material und mit druckerzeugenden Elementen zum Verpressen des Dichtungseinsatzes, wobei die Kabelmuffe im Einführungsbereich zum Ende kegelförmig erweitert ist, ein dem Einführungsbereich angepaßter, kegelförmiger Dichtungseinsatz angeordnet ist, und der Dichtungseinsatz mittels druckerzeugender Elemente so komprimierbar und verformbar ist, daß durch die Verformung in den Kabeleinführungen eine dichtende Anpressung an die eingeführten Kabel erfolgt.

Aus der deutschen Offenlegungsschrift 24 27 677 ist ein Muffenkopf mit mehreren in Längsrichtung geteilten Kabeleinführungen bekannt, wobei diese Kabeleinführungsöffnungen je nach Bedarf ausgeschnitten werden müssen. Als Dichtungsmittel wird jeweils ein bandförmiges plastisches Dichtungsmaterial eingelegt. Die Teilung des Muffenkopfes erfolgt durch parallele Trennebenen so, daß mehrere Dichtungskörpersegmente gebildet werden, in denen dann eine relativ beschränkte Anzahl von Kabeln eingeführt werden können.

Aus der europäischen Patentanmeldung 0 402 653 - A2 sind Kabeleinführungsdichtungen aus verformbarem Material in Form eines ringförmigen Stopfens aus einem geschäumten Elastomer bekannt, der in eine Kabeleinführungsöffnung in Form einer zylindrischen Hülse eines Gehäuses eingesetzt wird. Die Verformung solcher Dichtungen erfolgt nach der Art des einfachen und bekannten Stopfbuchsenprinzips.

Aus der US-A-2 688 651 ist ein Muffenkopf für eine Kabelmuffe mit Dichtungseinsätzen aus elastischem Material und mit druckerzeugenden Elementen zum Verpressen des Dichtungseinsatzes bekannt. Die Kabelmuffe weist kegelförmige Einführungsbereiche auf, in die entsprechend angepaßte Dichtungseinsätze eingesetzt werden. Die Dichtungseinsätze werden mittels druckerzeugender Elemente in Form von Überwurfmuttern so komprimiert und verformt, daß eine dichtende Anpressung an das eingeführte Kabel erfolgt.

Aus WO-A-92 22 113 ist eine Kabelmuffe bekannt, bei der im Einführungsbereich als Dichtung ein elastisches Material mittels Druckplatten axial verpreßt wird.

Aufgabe der Erfindung ist nun, eine einen Muffenkopf aufweisende Kabelmuffe zu schaffen, bei der möglichst viele Kabeleinführungen vorhanden sind, wobei die Dichtung mittels elastischem Material besonders einfach zu handhaben sein soll. Die gestellte Aufgabe wird nun mit einer einen Muffenkopf aufweisenden Kabelmuffe der eingangs erläuterten Art dadurch gelöst, daß der Dichtungseinsatz zwischen zwei Druckplatten angeordnet ist, auf die die druckerzeugenden Elemente einwirken und der Dichtungseinsatz kegelförmig zulaufende Kabeleinführungsöffnungen aufweist.

Vorteile gegenüber dem Stand der Technik ergeben sich mit einem Muffenkopf und einer Kabelmuffe gemäß der Erfindung dadurch, daß die Schließung und Abdichtung der Kabelmuffe in Bereich des Muffenkopfes mit einem einzigen Dichtungseinsatz aus elastischem Material für alle Kabeleinführungsöffnungen gleichzeitig erfolgen kann. Durch die kegelige Ausbildung der Kabelmuffe am Ende und die ebenfalls kegelige Ausbildung des Dichtungseinsatzes am äußeren Umfang ergeben sich vorteilhafte Verhältnisse bezüglich des erforderlichen Kompressionsdruckes für das Abdichten in den Kabeleinführungsöffnungen.

Dabei ist gleichgültig ob es sich um eine Durchgangsmuffe oder eine Topfmuffe handelt. Durch die Anordnung der auf den Dichtungseinsatz wirkenden druckerzeugenden Elemente erfolgt eine axiale Verpressung des aus gummielastischem Material bestehenden Dichtungseinsatzes. Die Kabeleinführungsöffnungen selbst sind ebenfalls kegelig ausgebildet, so daß ein weiter Bereich von Kabeldurchmessern erfaßt werden kann. Außerdem ist zweckmäßig, die Kabeleinführungsöffnungen so anzuordnen, daß sie jeweils zum äußeren Umfang des Dichtungseinsatzes hin mit einem radial verlaufenden Schlitz versehen werden können. Auf diese Weise ist es möglich, daß die Kabel von außen her in die Kabeleinführungsöffnungen des Dichtungseinsatzes eingeführt werden, so daß auch ungeschnittene Kabel eingesetzt werden können.

Der aus gummielastischem Material bestehende Dichtungseinsatz ist als Block ausgebildet und zwischen zwei Druckplatten im Dichtungsbereich der Kabelmuffe eingesetzt, wobei die Komprimierung im wesentlichen von außen infolge der kegeligen Ausbildung des Muffenendes beim axialen Einpressen durch die druckerzeugenden Elemente zustande kommt. Die Schlitze zum Einlegen der Kabel sind radial angeordnet und werden somit unmittelbar der komprimierenden Wirkung durch den Außenkegel ausgesetzt. Der relativ dicke Dichtungseinsatz sorgt für einen Ausgleich des Kompressionsdruckes innerhalb des Volumens. Bei einer normalen Stopfbuchsendichtung entsteht bei axialer Verpressung zwischen zwei Platten ein Kompressionsdruck von nur

$$p = \frac{P}{\frac{D1^2\pi}{4}}$$

(P = Kompressionskraft, D1 = Durchmesser der Platte)

Die Lösung gemäß der Erfindung hingegen ergibt bei gleicher Kraft einen viel höheren Kompressionsdruck

$$p = \frac{P}{(D1^2 - D2^2)\frac{\pi}{4}}$$

(D1 = Durchmesser der äußeren Druckplatte, D2 = Durchmesser der inneren Druckplatte)

Daraus ist ebenfalls einer großer Vorteil gegenüber bisherigen Dichtungen nach dem Stopfbuchsenprinzip zu ersehen.

Die Dicke des Dichtungseinsatzes ist etwa doppelt so groß wie die Durchmesserdifferenz der in eine Kabeleinführung einführbaren maximalen und minimalen Kabeldurchmesser und der Abstand der Kabeleinführungen zueinander soll mindestens das 1,3-fache des größten einführbaren Kabeldurchmessers betragen.

Außerdem ist Gegenstand der Erfindung, daß im Inneren der Kabelmuffe bereits an den Kabeleinführungsöffnungen Kabelabfangvorrichtungen installiert werden, die zweckmäßigerweise direkt an der inneren Druckplatte angeordnet werden, so daß jedes eingeführte Kabel direkt am Ende der Kabeleinführung gefaßt werden kann. Hierfür werden verschiedene Varianten vorgeschlagen, bei denen auch eine Kontaktierung eines Kabelschirmes mit erfolgen kann.

Die Erfindung wird nun anhand von 9 Figuren näher erläutert.

Figur 1 zeigt das Prinzip der Einführungsabdichtung gemäß der Erfindung in einem Querschnitt.

Figur 2 zeigt den Dichtungseinsatz vom Äußeren der Kabelmuffe her gesehen.

Figur 3 zeigt eine ringförmig geteilte Ausführung im Querschnitt.

Figur 4 zeigt die ringförmig geteilte Ausführung in Frontansicht.

Figur 5 zeigt eine Kabelabfangvorrichtung.

Figur 6 zeigt ein Ausführungsbeispiel, bei dem sich die druckerzeugenden Elemente durch die ganze Kabelmuffe hindurch erstrecken.

Figur 7 zeigt eine Kabelabfangung mit Schirmkontaktierung.

Figur 8 zeigt eine einfache Kabelabfangung.

Figur 9 zeigt eine zentral anzusetzende Kabelabfangvorrichtung.

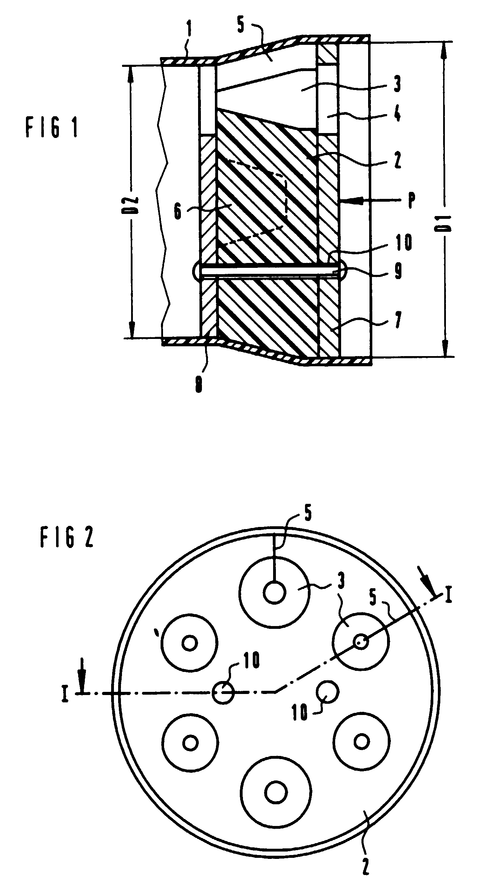

Die Figur 1 zeigt die prinzipielle Ausbildung einer Kabeleinführung mit einem Muffenkopf, in den mehrere Kabeleinführungsöffnungen angeordnet sind. Daraus wird deutlich, daß die Kabelmuffe 1 im Bereich des Muffenkopfes, der aus zwei Druckplatten 7 und 8 und einem dazwischen liegenden, elastischen Dichtungseinsatz 2 besteht, eine konische bzw. kegelige, sich nach auswärts aufweitende Öffnung aufweist. In diese kegelige Öffnung des Kabelmuffenendes wird der insgesamt ebenfalls kegelige Muffenkopf eingeführt, wobei die innere Druckplatte 8 in festem Abstand mit der äußeren Druckplatte 7 verbunden ist, z.B. mit Nietbolzen 9. Mit Hilfe von druckerzeugenden Elementen, die eine Kraft in Richtung P erzeugen, z.B. Schrauben, wird bei der Montage des Muffenkopfes nach dem Einlegen der Kabel dieser nach einwärts gepreßt und erzeugt einen Kompressionsdruck innerhalb des elastischen Materials. Der äußere Bereich der Kabelmuffe 1 verläuft zunächst soweit zylindrisch mit dem Durchmesser D1, daß die äußere Druckplatte 7 bis zur Erreichung des maximalen Kompressionsdruckes sich axial bewegen kann. Außerdem ist angedeutet, daß innerhalb des Dichtungseinsatzes 2 ein oder mehrere Füllstücke 6 oder auch Hohlräume eingearbeitet sein können, wodurch einerseits Dichtungsmaterial gespart werden kann und andererseits Einfluß auf das elastische Verhalten bezüglich der Härte des Blockes genommen werden kann. Außerdem ist noch ersichtlich, daß die Mantellinien der Kegel der Kabeleinführungsöffnungen (13) und des Dichtungskörpereinsatzes 2 parallel verlaufen.

Die Figur 2 zeigt den in Figur 1 eingesetzten Dichtungseinsatz 2 in einer Ansicht von außen her (jedoch ohne Druckplatte), so daß die kegeligen Ausbildungen der Kabelführungsöffnungen 3 in Erscheinung treten. Die kegeligen Kabeleinführungsöffnungen 3 sind hier kreisförmig angeordnet nahe der äußeren Abgrenzung, so daß radiale Schlitze 5 für das Einführen der Kabel, insbesondere ungeschnittener Kabel, zur Kante des Dichtungseinsatzes 2 geführt werden können. Außerdem sind die Bohrungen 10 für das Durchführen der Verbindungselemente zwischen den Druckplatten ersichtlich. Ferner ist der Schnitt I-I eingezeichnet, der der Figur 1 zugrunde liegt.

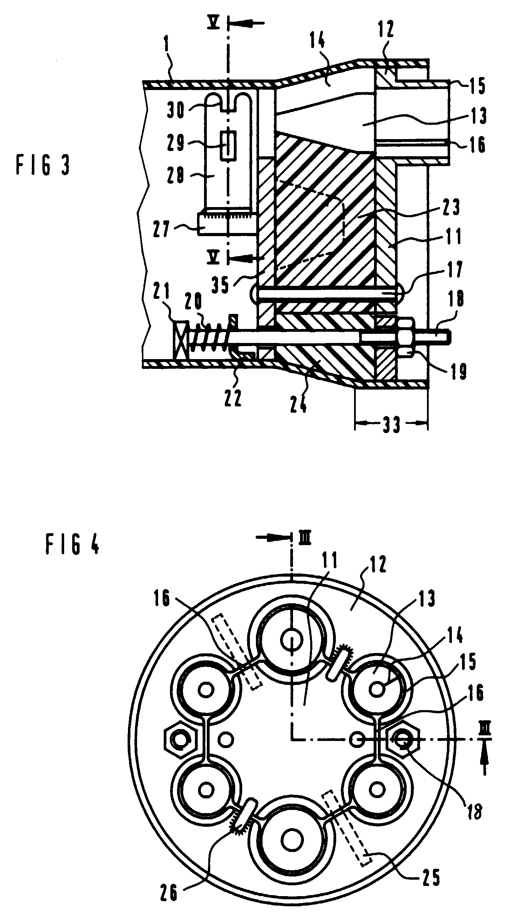

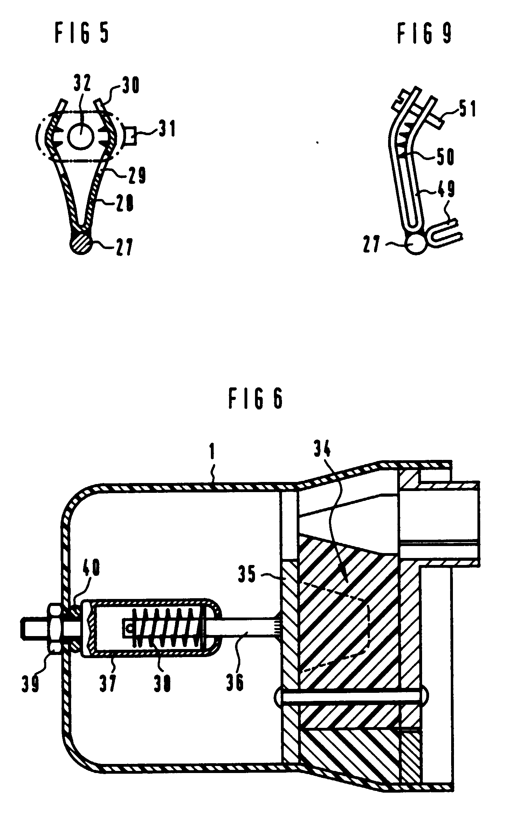

Figur 3 zeigt einen Muffenkopf mit einer speziellen Verschraubung zur Muffenhaube bzw. zum Muffenzylinder 1. Dabei sind die Schraubbolzen 18 als druckerzeugende Elemente mit ihren Enden 21 unverlierbar in der Muffenhaube oder dem Muffenzylinder 1 befestigt. Zur Montage werden die Schraubbolzen 18 durch die Einzelteile des Muffenkopfes geführt und durch Aufschrauben von Muttern 19 gespannt. Die drehgesicherten Schraubbolzen 18 spannen dabei je eine Druckfeder 20 (Schrauben- oder Tellerfedern) gegen eine Führung 22. Durch diese federnde Anordnung ergibt sich zusätzlich zum gummielastischen Werkstoff ein federnder Nachdruck, durch den Kaltfluß oder Volumenänderungen durch Temperatureinflüsse ausgeglichen werden können. Durch die gegenläufige Schraffur des Dichtungseinsatzes in der Figur ist angedeutet, daß bei diesem Ausführungsbeispiel eine Trennung des Dichtungseinsatzes vorgenommen ist und zwar ist der Dichtungseinsatz geteilt in einen Zentralteil 23 und einen Ringteil 24. Dadurch ist eine Trennfläche gebildet, in der die Kabeleinführungen 13 angeordnet sind. Auf diese Weise kann auf die nach außen führenden Schlitze (hier ist zusätzlich noch ein solcher Schlitz 14 gezeichnet) verzichtet werden, doch müssen dann auch die Druckplatten entsprechend gestaltet werden. Somit ist dann auch eine Montage bei ungeschnittenen Kabeln möglich. Die hier maßgebenden Gestaltungen gehen aus Figur 4 hervor. Hier in Figur 3 ist jedoch noch der zylindrische Bewegungsbereich 33 für die äußeren Druckplattenteile 11 und 12 angegeben. Außerdem ist im Inneren der Kabelmuffe 1 eine Kabelabfangvorrichtung 28 angegeben (der Übersicht wegen nur eine einzige), die mit der Kabeleinführungsöffnung 13 fluchtet. Diese Kabelabfangvorrichtung ist an einem Zentralbolzen 27 befestigt, an dem auch alle weiteren Kabelabfangvorrichtungen sternförmig angesetzt werden können. Jede dieser Kabelabfangvorrichtungen 28 besteht aus zwei Klammerschenkeln 30, die das eingeführte Kabel umfassen und mittels eines Spannbandes zusammengepreßt werden. In diese Figur ist noch herausgestellt, daß die Kabeleinführungsöffnungen der äußeren Druckplatten 11 bzw. 12 jeweils mit zylindrischen Knickschutzstutzen 15 versehen sind. Durch diese Knickschutzstutzen 15 wird verhindert, daß Biegebelastungen am Kabel von der Abdichtstelle abgehalten werden. In diesem Bereich ist auch die Trennfläche 16 zwischen dem Zentralteil 11 und dem Ringsteil 12 der äußeren Druckplatte erkennbar.

Die Figur 4 zeigt nun in einer Draufsicht die Verhältnisse eines durch eine etwa kreisförmige Trennfläche 16 geteilten Muffenkopfes, wobei dadurch das Zentralteil 11 und das Ringteil 12 entsteht. In dieser Trennfläche 16 sind nun die Kabeleinführungsöffnungen 13 angeordnet, um die herum die zylinderförmigen Knickschutzstutzen 15 verlaufen. Außerdem sind die in dem Ringteil 12 befindlichen Schraubbolzen 18 zu erkennen. Für die gleichmäßige Übertragung des Kompressionsdruckes über die gesamte Fläche hinweg sind Positionierungsvorrichtungen bzw. Anschlagelemente 26 angebracht, durch die das Zentralteil 11 mitgeführt wird. Für die Positionierung der einzelnen Muffenkopfelemente zueinander können auch radial gerichtete Fixierelemente 25 angeordnet werden. Wie angedeutet ist, können die in einem einstückigen Dichtungseinsatz befindlichen Kabeleinführungsöffnungen 13 auch mit radial nach auswärts gerichteten Schlitzen 14 versehen werden.

Die Figur 5 vermittelt die Ausbildung der in Figur 3 gezeigten Kabelabfangvorrichtung aus den Klammerschenkeln 28, die am Zentralbolzen 27 befestigt sind. Nach Aufnahme eines Kabels 32 werden die Klammerschenkeln 28 mit einem durch Öffnungen 29 und Schlitze 30 geführtes Spannband 31 zusammengepreßt.

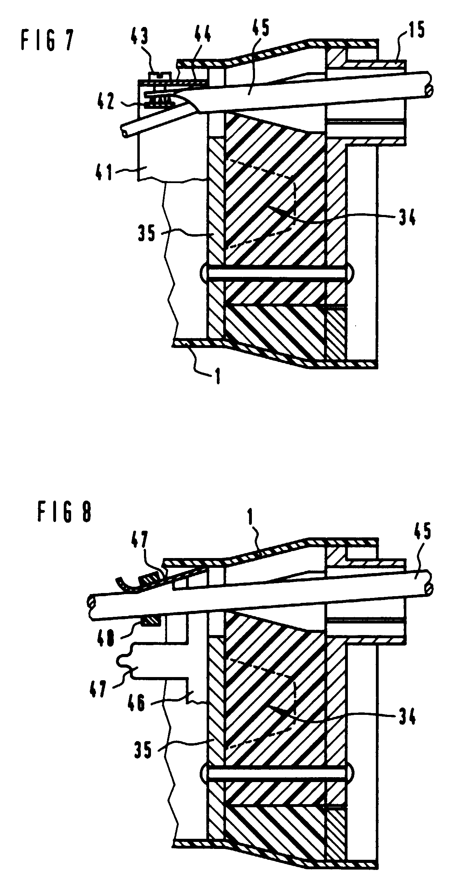

In Figur 6 wird eine Haubenmuffe 1 gezeigt, bei der das druckerzeugende Element durch den Haubenteil hindurchgeführt ist. Es besteht aus einem zentral angeordneten Bolzen 36, der an der inneren Druckplatte 35 befestigt ist. Ein Federelement 38 sorgt für einen dauerhaften Nachdruck. Ein Dichtungsring 40 ergibt die erforderliche Abdichtung im Haubengehäuse. Bei einer solchen Ausführung wird nur ein Federelement benötigt, falls der Werkstoff und die Temperaturbeanspruchung überhaupt eine Nachdruckeinrichtung erfordern. Die Figur 7 zeigt eine weitere Variante für eine Kabelabfangvorrichtung im Inneren einer Kabelmuffe 1 mit einem Muffenkopf und einer Abdichtung 34 wie sie der Erfindung zugrunde liegt. Diese Kabelabfangvorrichtung ist an der inneren Druckplatte 35 befestigt und besteht aus einem Abfangring 41, der um alle Kabeleinführungsöffnungen herum in einem Stück angeordnet ist. An diesen Abfangring 41 können mittels Schrauben 43 alle Kabelmäntel 45, bei denen ein Kabelmantellappen 44 gebildet worden ist, angeklemmt werden, wobei auf der Innenseite dieses Kabelmantellappens 44 eine Kontaktplatte 42 mit Durchrissen angeordnet ist. Wenn der Kabelmantel mit einem Schirm versehen ist oder als Schichtenmantel ausgebildet ist, kann dieser Schirm mit dieser Abfangvorrichtung gleichzeitig kontaktiert werden. Außerdem wird hier dargelegt, daß das Kabel 45 bei Biegebelastung am Rande des zylindrischen Knickschutzstutzens 15 anstößt und daß dadurch diese Belastung von der Dichtungsstelle ferngehalten wird.

In Figur 8 wird eine Kabelabfangvorrichtung erläutert, die ebenfalls aus einem gemeinsamen Ring 46 besteht, an dem bei jeder Kabeleinführung eine Lasche 47 ausgeformt ist. Diese Laschen 47 werden bei Bedarf auf den Kabelmantel 45 gebogen und mittels Spannbänder 48 darauf festgeklemmt, wie das Teilschnittbild der Figur darstellt. Die übrigen Verhältnisse bezüglich des Muffenkopfes sind bereits beschrieben.

Die Figur 9 zeigt wieder eine Abfangklemme, die aus zwei Klammerschenkeln 49 gebildet ist, wobei diese einerseits an einem Zentralbolzen 27 sternförmig befestigt sind und andererseits so ausgeformt sind, daß zwischen ihren Enden z.B. ein Kabelmantellappen mittels Schrauben 51 festgeklemmt werden können. Durchrisse 50 begünstigen die Griffigkeit.

Diese Ausführungen können in entsprechender Weise vereinigt oder kombiniert werden, wobei jedoch bei allen Ausführungen die prinzipielle Ausbildung des Muffenkopfes im Zusammenhang mit der entsprechenden Kabelmuffe erhalten bleibt.

**Patentansprüche**

1. Muffenkopf aufweisende Kabelmuffe (1) mit einem Dichtungseinsatz (2) aus elastischem Material und mit druckerzeugenden Elementen zum Verpressen des Dichtungseinsatzes, wobei die Kabelmuffe (1) im Einführungsbereich zum Ende kegelförmig erweitert ist, ein dem Einführungsbereich angepaßter, kegelförmiger Dichtungseinsatz (2) angeordnet ist, und der Dichtungseinsatz (2) mittels druckerzeugender Elemente so komprimierbar und verformbar ist, daß durch die Verformung in den Kabeleinführungen (3, 13) eine dichtende Anpressung an die eingeführten Kabel (45) erfolgt,
**dadurch gekennzeichnet,**
daß der Dichtungseinsatz (2) zwischen zwei Druckplatten (7-8, 11-12-35) angeordnet ist, auf die die druckerzeugenden Elemente (P, 18) einwirken und der Dichtungseinsatz (2) kegelförmig zulaufende Kabeleinführungsöffnungen (3, 13) aufweist.

2. Muffenkopf aufweisende Kabelmuffe nach Anspruch 1,
**dadurch gekennzeichnet,**
daß die Kabeleinführungsöffnungen (3, 13) kreisförmig im Dichtungseinsatz (2) angeordnet sind und daß radiale Schlitze (5, 14) vom Umfang des Dichtungseinsatzes (2) zu den Kabeleinführungsöffnungen (3, 13) verlaufen.

3. Muffenkopf aufweisende Kabelmuffe nach einem der vorhergehenden Ansprüche, **dadurch gekennzeichnet,** daß der Dichtungseinsatz (2) Hohlräume (6) aufweist.

4. Muffenkopf aufweisende Kabelmuffe nach einem der vorhergehenden Ansprüche, **dadurch gekennzeichnet,** daß Nietbolzen (9) zwischen den Druckplatten (7-8, 11-12-35) durch den Dichtungseinsatz (2) hindurch angeordnet sind, die den Abstand zwischen den Druckplatten (7-8, 11-12-35) vorgeben.

5. Muffenkopf aufweisende Kabelmuffe nach einem der vorhergehenden Ansprüche, **dadurch gekennzeichnet,** daß die Dicke des Dichtungseinsatzes (2) doppelt so groß ist wie die Differenz aus maximalen und minimalen Kabeldurchmesser.

6. Muffenkopf aufweisende Kabelmuffe nach einem der vorhergehenden Ansprüche, **dadurch gekennzeichnet,** daß als druckerzeugende Elemente mindestens eine Schraube (18) vorgesehen ist, die vorzugsweise im Inneren der Kabelmuffe (1) mit einer Arretierung (22) fixiert ist.

7. Muffenkopf aufweisende Kabelmuffe nach Anspruch 6, **dadurch gekennzeichnet,** daß zwischen der Arretierung (22) für das druckerzeugende Element (18) und dem Schraubenende (21) eine Feder (20) angeordnet ist.

8. Muffenkopf aufweisende Kabelmuffe nach einem der vorhergehenden Ansprüche, **dadurch gekennzeichnet,** daß die Druckplatten (11-12, 35) und eventuell der Dichtungseinsatz (2) in Einführungsrichtung in jeweils einen Zentralteil (11) und einen Ringteil (12) geteilt sind, wobei die Kabeleinführungsöffnungen (13) in der Trennfläche (16) angeordnet sind, daß zwischen dem Zentralteil (11) und dem Ringteil (12) gegenseitige Positionierungselemente (25) oder Anschlagelemente (26) angeordnet sind.

9. Muffenkopf aufweisende Kabelmuffe nach einem der vorhergehenden Ansprüche, **dadurch gekennzeichnet,** daß der Abstand der Kabeleinführungsöffnungen (13) zueinander mindestens 1,3-fache des größten einzuführenden Kabeldurchmessers beträgt.

10. Muffenkopf aufweisende Kabelmuffe nach einem der vorhergehenden Ansprüche, **dadurch gekennzeichnet,** daß der Kompressionsdruck p auf den Dichtungseinsatz (2) nach folgender Beziehung beträgt:

$$p = \frac{P}{(D1^2 - D2^2)\frac{\pi}{4}} ,$$

wobei P = Kompressionskraft, D1 = Durchmesser der äußeren Platte und D2 = Durchmesser der inneren Platte.

11. Muffenkopf aufweisende Kabelmuffe nach einem der vorhergehenden Ansprüche, **dadurch gekennzeichnet,** daß der Dichtungseinsatz (2), vorzugsweise das Zentralteil (11) ein Füllstück (6) enthält, mit dem die elastische Charakteristik des Dichtungseinsatzes (2) veränderbar ist.

12. Muffenkopf aufweisende Kabelmuffe nach einem der vorhergehenden Ansprüche, **dadurch gekennzeichnet,** daß die äußere Druckplatte (11-12) um die Kabeleinführungsöffnungen (13) herum jeweils zylindrische Knickschutzstutzen (15) aufweist.

13. Muffenkopf aufweisende Kabelmuffe nach einem der vorhergehenden Ansprüche, **dadurch gekennzeichnet,** daß im Inneren der Kabelmuffe (1) mit jeder Kabeleinführungsöffnung (13) fluchtend eine Kabelabfangvorrichtung (28, 49) angeordnet ist.

14. Muffenkopf aufweisende Kabelmuffe nach Anspruch 13, **dadurch gekennzeichnet,** daß die Kabelabfangvorrichtung (28, 49) aus jeweils zwei Klammerschenkeln bestehen, die an einem Zentralbolzen (27) befestigt sind, der an der inneren Druckplatte (35) angeordnet ist.

15. Muffenkopf aufweisende Kabelmuffe nach Anspruch 14, **dadurch gekennzeichnet,** daß die Klammerschenkel (28) nach Einführung eines Kabels (32) das Kabel umfassend mit einem Spannband (31) fixierbar sind.

16. Muffenkopf aufweisende Kabelmuffe nach Anspruch 14, **dadurch gekennzeichnet,** daß die Klammerschenkel (49) zwischen sich einen Kabelmantellappen (44) klemmend erfassen.

17. Muffenkopf aufweisende Kabelmuffe nach Anspruch 13,

**dadurch gekennzeichnet,**

daß die Kabelabfangvorrichtung aus einem in der Kabelmuffe (1) fixierbaren Abfangring (41) besteht, der ringförmig alle Kabeleinführungsöffnungen (13) umfaßt und daß jeder entsprechend präparierte Kabelmantel (45) mittels einer Klemmvorrichtung (42-43) an dem Abfangring (41) anklemmbar ist.

18. Muffenkopf aufweisende Kabelmuffe nach Anspruch 17,

**dadurch gekennzeichnet,**

daß eine Kontaktplatte (42) vorzugsweise mit Durchrissen auf der Schirmseite des Kabelmantels (45) eingeschoben und am Abfangring (41) befestigt ist.

19. Muffenkopf aufweisende Kabelmuffe nach Anspruch 17,

**dadurch gekennzeichnet,**

daß der Abfangring (46) abstehende Laschen (47) aufweist, daß die Laschen (47) mittels Kabelbinder (48) oder ähnlichen Elementen auf den eingeführten Kabeln (45) fixierbar sind.

20. Muffenkopf aufweisende Kabelmuffe nach einem der vorhergehenden Ansprüche,

**dadurch gekennzeichnet,**

daß am offenen Ende der Kabelmuffe (1) ein zylindrisch verlaufender Bereich (33) vorgesehen ist, in dem der mittels Druckelemente (18) erzeugbare Kompressionshub der äußeren Druckplatte (11-12) erfolgen kann.

21. Muffenkopf aufweisende Kabelmuffe nach einem der vorhergehenden Ansprüche,

**dadurch gekennzeichnet,**

daß die innere Druckplatte (35) ein zentral angreifendes Druckelement (36-37) aufweist, das am Ende als Schraubbolzen ausgebildet ist und vom Ende der als Haubenmuffe (1) ausgebildeten Kabelmuffe eindrehbar ist, wobei an der Eintrittsöffnung des Schraubbolzens ein Dichtring (40) angeordnet ist.

22. Muffenkopf aufweisende Kabelmuffe nach Anspruch 21,

**dadurch gekennzeichnet,**

daß das druckerzeugende Element (36-37) eine Feder (38) enthält, die eine Dauerpressung aufrecht erhält.

23. Muffenkopf aufweisende Kabelmuffe nach einem der vorhergehenden Ansprüche,

**dadurch gekennzeichnet,**

daß die Mantellinien der Kegel der Kabeleinführungsöffnungen (13) und des Dichtungskörpereinsatzes (2) parallel verlaufen.

**Claims**

1. Cable sleeve (1) having a sleeve head and a sealing insert (2) made from an elastic material and having pressure-producing elements for pressing the sealing insert, the cable sleeve (1) being conically widened towards the end in the inlet region, a conical sealing insert (2) adapted to the inlet region being arranged, and it being possible to compress and deform the sealing insert (2) by means of pressure-producing elements such that the deformation in the cable inlets (3, 13) effects a sealing contact pressure against the inserted cable (45), characterized in that the sealing insert (2) is arranged between two pressure plates (7-8, 11-12-35) on which the pressure-producing elements (P, 18) act, and the sealing insert (2) has conically converging cable inlet openings (3, 13).

2. Cable sleeve having a sleeve head according to Claim 1, characterized in that the cable inlet openings (3, 13) are arranged in the shape of a circle in the sealing insert (2), and in that radial slits (5, 14) extend from the circumference of the sealing insert (2) to the cable inlet openings (3, 13).

3. Cable sleeve having a sleeve head according to one of the preceding claims, characterized in that the sealing insert (2) has cavities (6).

4. Cable sleeve having a sleeve head according to one of the preceding claims, characterized in that clinch bolts (9) which prescribe the difference between the pressure plates (7-8, 11-12-35) are arranged, passing through the sealing insert (2), between the pressure plates (7-8, 11-12-35).

5. Cable sleeve having a sleeve head according to one of the preceding claims, characterized in that the thickness of the sealing insert (2) is twice as great as the difference between the maximum and minimum cable diameters.

6. Cable sleeve having a sleeve head according to one of the preceding claims, characterized in that at least one screw (18) which is preferably fixed in the interior of the cable sleeve (1) by means of a detent (22) is provided as pressure-producing element.

7. Cable sleeve having a sleeve head according to Claim 6, characterized in that a spring (20) is arranged between the detent (22) for the pressure-producing element (18) and the screw end (21).

8. Cable sleeve having a sleeve head according to one of the preceding claims, characterized in that the pressure plates (11-12, 35) and, possibly, the sealing insert (2) are split in the introduction direction into in each case a central part (11) and an annular part (12), the cable inlet openings (13) being arranged in the parting surface (16) and in that mutual positioning elements (25) or stop elements (26) are arranged between the central part (11) and the annular part (12).

9. Cable sleeve having a sleeve head according to one of the preceding claims, characterized in that the spacing of the cable inlet openings (13) from one another is at least 1.3 times the largest cable diameter to be inserted.

10. Cable sleeve having a sleeve head according to one of the preceding claims, characterized in that the compressive pressure p on the sealing insert (2) is as given by the following relationship:

$$p = \frac{P}{(D1^2 - D2^2)\frac{\pi}{4}},$$

where P = compressive force, D1 = diameter of the outer plate and D2 = diameter of the inner plate.

11. Cable sleeve having a sleeve head according to one of the preceding claims, characterized in that the sealing insert (2), preferably the central part (11), contains a filling piece (6) by means of which the elastic characteristic of the sealing insert (2) can be varied.

12. Cable sleeve having a sleeve head according to one of the preceding claims, characterized in that the outer pressure plate (11-12) respectively has cylindrical anti-kink connecting pieces (15) around the cable inlet openings (13).

13. Cable sleeve having a sleeve head according to one of the preceding claims, characterized in that a cable clamping device (28, 49) is arranged in alignment with each cable inlet opening (13) in the interior of the cable sleeve (1).

14. Cable sleeve having a sleeve head according to Claim 13, characterized in that the cable clamping device (28, 49) comprises in each case two clamp legs which are fastened to a central bolt (27) which is arranged on the inner pressure plate (35).

15. Cable sleeve having a sleeve head according to Claim 14, characterized in that after introduction of a cable (32) the clamp legs (28) can be fixed by means of a clamping band (31) embracing the cable.

16. Cable sleeve having a sleeve head according to Claim 14, characterized in that the clamp legs (49) grip a cable sheath tab (44) between them in a clamping fashion.

17. Cable sleeve having a sleeve head according to Claim 13, characterized in that the cable clamping device comprises a clamping ring (41) which can be fixed in the cable sleeve (1) and embraces all the cable inlet openings (13) in an annular fashion, and in that each appropriately prepared cable sheath (45) can be clamped to the clamping ring (41) by means of a clamping device (42-43).

18. Cable sleeve having a sleeve head according to Claim 17, characterized in that a contact plate (42) preferably having perforations is inserted on the shielding side of the cable sheath (45) and is fastened to the clamping ring (41).

19. Cable sleeve having a sleeve head according to Claim 17, characterized in that the clamping ring (46) has projecting lugs (47), and in that the lugs (47) can be fixed on the inserted cables (45) by means of cable ties (48) or similar elements.

20. Cable sleeve having a sleeve head according to one of the preceding claims, characterized in that there is provided at the open end of the cable sleeve (1) a cylindrically extending region (33) in which the compression stroke, which can be produced by means of pressure elements (18), of the outer pressure plate (11-12) can be performed.

21. Cable sleeve having a cable head according to one of the preceding claims, characterized in that the inner pressure plate (35) has a centrally acting pressure element (36-37) which is constructed at the end as a screw bolt and can be screwed in from the end of the cable sleeve constructed as a hood sleeve (1), a sealing ring (40) being arranged at the entry opening of the screw bolt.

22. Cable sleeve having a sleeve head according to Claim 21, characterized in that the pressure-producing element (36-37) contains a spring (38) which maintains a lasting pressure.

23. Cable sleeve having a sleeve head according to one of the preceding claims, characterized in that the generating lines of the cones of the cable inlet openings (13) and of the sealing member insert (2) extend in parallel.

**Revendications**

1. Manchon (1) de câbles comportant une tête de manchon et un insert (2) d'étanchéité en matériau élastique et des éléments produisant une pression pour comprimer l'insert d'étanchéité, le manchon (1) de câbles étant élargi de manière conique vers l'extrémité dans la zone d'introduction, un insert (2) d'étanchéité conique adapté à la zone d'introduction étant monté et l'insert (2) d'étanchéité pouvant, au moyen d'éléments produisant une pression, être comprimé et déformé de manière à obtenir par la déformation, dans les entrées (3, 13) de câble, une application aux câbles (45) introduits donnant de l'étanchéité, caractérisé en ce que l'insert (2) d'étanchéité est monté entre deux plaques (7-8, 11-12-35) d'application d'une pression, sur lesquelles agissent les éléments (P, 18) produisant une pression et en ce que l'insert (2) d'étanchéité comporte des ouvertures (3, 13) d'introduction de câble qui se terminent de manière conique.

2. Manchon de câbles comportant une tête de manchon suivant la revendication 1, caractérisé en ce que les ouvertures (3, 13) d'introduction de câble sont ménagées de manière circulaire dans l'insert (2) d'étanchéité et en ce que des fentes (5, 14) radiales s'étendent du pourtour de l'insert (2) d'étanchéité aux ouvertures (3, 13) d'introduction de câble.

3. Manchon de câbles comportant une tête de manchon suivant l'une des revendications précédentes, caractérisé en ce que l'insert (2) d'étanchéité comporte des cavités (6).

4. Manchon de câbles comportant une tête de manchon suivant l'une des revendications précédentes, caractérisé en ce qu'il est monté entre les plaques (7-8, 11-12-35) d'application d'une pression, au travers de l'insert (2) d'étanchéité, des tiges rivetées, qui prescrivent la distance entre les plaques (7-8, 11-12-35) d'application d'une pression.

5. Manchon de câbles comportant une tête de manchon suivant l'une des revendications précédentes, caractérisé en ce que l'épaisseur de l'insert (2) d'étanchéité est deux fois plus grande que la différence entre les diamètres maximum des câbles et les diamètres minimum des câbles.

6. Manchon de câbles comportant une tête de manchon suivant l'une des revendications précédentes, caractérisé en ce qu'il est prévu comme éléments produisant une pression au moins une vis (18), qui de préférence est immobilisée à l'intérieur du manchon (1) de câbles par un dispositif (22) de blocage.

7. Manchon de câbles comportant une tête de manchon suivant la revendication 6, caractérisé en ce qu'il est monté un ressort (20) entre le dispositif (22) de blocage destiné à l'élément produisant une pression et l'extrémité (21) de la vis.

8. Manchon de câbles comportant une tête de manchon suivant l'une des revendications précédentes, caractérisé en ce que les plaques (11-12-35) d'application d'une pression et éventuellement l'insert (2) d'étanchéité sont subdivisés dans la direction d'introduction en une pièce (11) centrale et en une pièce (12) annulaire, les ouvertures (13) d'introduction de câble étant ménagées dans la surface (16) de joint, et en ce qu'il est monté entre la pièce (11) centrale et la pièce (12) annulaire des éléments (25) de mise en position opposés ou des éléments (26) de butée.

9. Manchon de câbles comportant une tête de manchon suivant l'une des revendications précédentes, caractérisé en ce que la distance entre les ouvertures (13) d'introduction de câble est égale à au moins 1,3 fois le plus grand diamètre de câble pouvant être introduit.

10. Manchon de câbles comportant une tête de manchon suivant l'une des revendications précédentes, caractérisé en ce que la pression p de compression sur l'insert (2) d'étanchéité est donné par la relation suivante:

$$p = \frac{P}{(D1^2 - D2^2)\frac{\pi}{4}} \ ,$$

avec P = force de compression, =D1 = diamètre de la plaque extérieure, D2 = diamètre de la plaque intérieure.

11. Manchon de câbles comportant une tête de manchon suivant l'une des revendications précédentes, caractérisé en ce que l'insert (2) d'étanchéité, de préférence la pièce (11) centrale, contient une pièce (6) de remplissage, par laquelle la caractéristique d'élasticité de l'insert (2) d'étanchéité peut être modifiée.

12. Manchon de câbles comportant une tête de manchon suivant l'une des revendications précédentes, caractérisé en ce que la plaque (11-12) extérieure d'application d'une pression comporte autour de chacune des ouvertures (13) d'introduction de câble un embout (15) cylindrique empêchant un infléchissement.

13. Manchon de câbles comportant une tête de manchon suivant l'une des revendications précédentes, caractérisé en ce qu'il est monté à l'intérieur du manchon (1) de câbles, en alignement avec chaque ouvertures (13) d'introduction de câble, des serrecâble (28, 49).

**14.** Manchon de câbles comportant une tête de manchon suivant la revendication 13, caractérisé en ce que les serre-câble (28, 49) sont constitués chacun de deux branches d'agrafe qui sont fixées à une tige (27) centrale qui est montée sur la plaque (35) intérieure d'application d'une pression.

**15.** Manchon de câbles comportant une tête de manchon suivant la revendication 14, caractérisé en ce que, après qu'un câble (32) a été introduit, les branches (28) d'agrafe peuvent être immobilisées par un collier (31) de serrage en enserrant le câble.

**16.** Manchon de câbles comportant une tête de manchon suivant la revendication 14, caractérisé en ce que les branches (49) d'agrafe saisissent entre elles en la bloquant une languette (44) de gaine de câble.

**17.** Manchon de câbles comportant une tête de manchon suivant la revendication 13, caractérisé en ce que le serre-câble est constitué d'une bague (41) de préhension, qui peut être immobilisée dans le manchon (1) de câble et qui entoure annulairement toutes les ouvertures (13) d'introduction de câble, et en ce que chaque gaine (45) de câble préparée de manière appropriée peut être bloquée sur la bague (41) de préhension au moyen d'un dispositif (42-43) de serrage.

**18.** Manchon de câbles comportant une tête de manchon suivant la revendication 17, caractérisé en ce qu'une plaque (42), de préférence comportant des fissures de passage, est enfilée du côté de protection de la gaine (45) de câble et fixée à la bague (41) de préhension.

**19.** Manchon de câbles comportant une tête de manchon suivant la revendication 17, caractérisé en ce que la bague (46) de préhension comporte des languettes (47) en saillie et en ce que les languettes (47) peuvent être immobilisées sur les câbles (45) introduits au moyen de liens (48) pour câbles ou d'éléments similaires.

**20.** Manchon de câbles comportant une tête de manchon suivant l'une des revendications précédentes, caractérisé en ce qu'il est prévu à l'extrémité ouverte du manchon (1) de câbles une zone (33) qui s'étend de manière cylindrique et dans laquelle peut s'effectuer la course de compression de la plaque (11-12) extérieure d'application d'une pression pouvant être produite au moyen d'éléments (18) d'application d'une pression.

**21.** Manchon de câbles comportant une tête de manchon suivant l'une des revendications précédentes, caractérisé en ce que la plaque (35) intérieure d'application d'une pression comporte un élément (36, 37) d'application d'une pression, qui attaque au centre, qui est réalisé en tige filetée à l'extrémité et qui peut être vissé de l'extrémité du manchon de câble réalisé en manchon (1) en forme de chapeau, une bague (40) d'étanchéité étant montée à l'ouverture d'entrée de la tige filetée.

**22.** Manchon de câbles comportant une tête de manchon suivant la revendication 21, caractérisé en ce que l'élément (36-37) produisant une pression contient un ressort (38) qui maintient une pression persistante.

**23.** Manchon de câbles comportant une tête de manchon suivant l'une des revendications précédentes, caractérisé en ce que les génératrices des cônes des ouvertures (13) d'introduction de câble et de l'insert (2) d'étanchéité s'étendent parallèlement.

FIG 1

FIG 2

FIG 3

FIG 4

FIG 5

FIG 9

FIG 6

FIG 7

FIG 8